# EUROPÄISCHE PATENTSCHRIFT

(11) **EP 0 612 414 B1**
(45) Veröffentlichungstag und Bekanntmachung des Hinweises auf die Patenterteilung: **12.11.1997**
(21) Anmeldenummer: 93919002.1
(22) Anmeldetag: 15.09.1993
(51) Int. Cl.: G02B 21/00

(54) **VARIABLER AUFLICHT-INTERFERENZANSATZ NACH MIRAU**
VARIABLE MIRAU REFLECTED LIGHT INTERFERENCE MICROSCOPY ACCESSORY
ELEMENT VARIABLE D'INTEFERENCE PAR REFLEXION D'APRES MIRAU

(30) Priorität: 17.09.1992 DE 4231069
(43) Veröffentlichungstag der Anmeldung: 31.08.1994
(73) Patentinhaber: LEICA MIKROSKOPIE UND SYSTEME GmbH, D-35530 Wetzlar (DE)
(72) Erfinder: STANKEWITZ, Hans-Werner, D-35579 Wetzlar (DE)
(86) Internationale Anmeldenummer: DE9300866
(87) Internationale Veröffentlichungsnummer: WO9407165

(56) Entgegenhaltungen:
- WO-A-91/05218
- DE-A- 3 627 185
- GB-A- 2 182 170
- K. Mütze et al.: "ABC der Optik" Werner Dausien Verlag, Hanau/Main, 1972, Seiten 400-404, "Interferenzmikroskop", Siehe S. 401 und Fig. 2

## Beschreibung

Die Erfindung betrifft einen variablen Auflicht-Interferenzansatz nach Mirau für die Beobachtung und Messung an Objektoberflächen.

Zu den interferenzmikroskopischen Verfahren, die unter Zuhilfenahme der Erscheinungen der Interferenz des Lichtes Aufschluß über die Mikrostruktur der Objekte geben, gehören neben der Vielstrahl-Interferenz-Einrichtung nach Tolansky auch Zweistrahl-Interferenz-Einrichtungen nach Michelson bzw. nach Mirau.

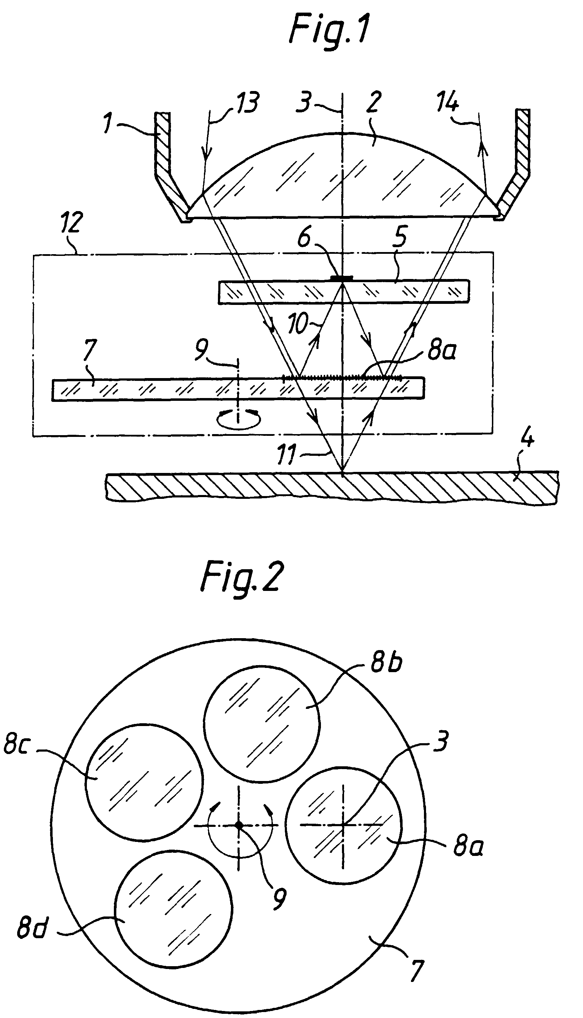

Aus K. Mütze: "ABC der Optik", Verlag Werner Dausien, Hanau 1960, Seiten 400 und 401, ist ein Auflicht-Interferenzmikroskop nach Mirau bekannt, vgl. Seite 401, rechte Spalte in Verbindung mit Abbildung 2, bei dem zwischen der Frontlinse eines Auflichtobjektives und dem zu prüfenden Objekt eine teildurchlässige Fläche angeordnet ist. Außerdem weist die zum Objekt weisende Seite der Frontlinse in ihrem Zentralbereich einen verspiegelten Fleck auf. Bei dieser bekannten Anordnung wird das einfallende Beleuchtungslicht an der senkrecht zur Mikroskopachse angeordneten teildurchlässigen Fläche in zwei Teile aufgespalten. Ein Teil fällt nach Durchtritt durch die teildurchlässige Fläche auf das Objekt, wird dort reflektiert und durchdringt erneut die teildurchlässige Fläche und tritt schließlich wieder in die Frontlinse des Objektivs ein. Der andere Teil wird an der teildurchlässigen Fläche reflektiert, trifft sodann auf den metallisch reflektierenden Fleck, wird anschließend auf die teildurchlässige Fläche zurückgeworfen und überlagert sich nach nochmaliger Reflexion dieser Teilerfläche mit dem vom Objekt kommenden reflektierten Licht.

Der Nachteil dieser bekannten Anordnung besteht unter anderem darin, daß die zu untersuchenden Objekte Reflektivitäten (Reflexionswerte) aufweisen können, die in weiten Grenzen variieren. Wenn beispielsweise ein Objekt ausgemessen werden soll, das lediglich einen Reflexionswert von 5% aufweist (z.B. ein Kohle-Präparat), so können extreme Helligkeitsprobleme auftreten, da der metallisch reflektierende, verspiegelte Fleck im Vergleich zum schwach reflektierenden Kohle-Präparat eine sehr hohe Reflektivität aufweist.

Es ist daher die Aufgabe der vorliegenden Erfindung, einen Auflicht-Interferenzansatz bereitzustellen, mit dem Objektoberflächen unterschiedlichster Reflektivitäten ohne Helligkeitsprobleme beobachtet und vermessen werden können, wodurch die Verwendung des erfindungsgemäßen Interferenzansatzes für alle praktisch in Frage kommenden Objekte ohne Einschränkungen ermöglicht wird.

Die Aufgabe wird bei einem Interferenzansatz der eingangs genannten Art erfindungsgemäß dadurch gelöst, daß der Träger mehrere Teilerspiegel aufweist, die sich in ihren jeweiligen Reflexions-/Transmissions-Charakteristiken definitiv unterscheiden und die in Abhängigkeit von der Reflektivität des zu untersuchenden Objektes wahlweise in Wirkstellung bringbar sind.

Weitere zweckmäßige Ausgestaltungen ergeben sich aus den Unteransprüchen.

Die Erfindung ist anhand der Figuren 1 und 2 näher erläutert. Es zeigen:
- Fig.1:: eine schematische Darstellung des erfindungsgemäßen Auflicht-Interferenzansatzes im Vertikal-Schnitt;
- Fig.2:: eine Draufsicht auf die die unterschiedlichen Teilerspiegel tragende Revolverscheibe.

In Fig.1 ist die Frontlinse 2 eines Objektives 1 eines nicht mit dargestellten Mikroskops gezeigt, dessen optische Achse 3 gleichzeitig die optische Achse des erfindungsgemäßen Interferenzansatzes ist. Auf einer Glasplatte 5, die vertikal zur optischen Achse 3 angeordnet ist, befindet sich auf der zum Objektiv 1 weisenden Seite ein Referenzspiegel 6. Dabei handelt es sich um einen metallisch reflektierenden, zentral positionierten Belag, der beispielsweise durch Aufdampfen aufgebracht werden kann. Zwischen der Glasplatte 5 und dem Objekt 4 befindet sich eine beispielsweise aus Glas bestehende Revolverscheibe 7, deren Drehachse 9 parallel zur optischen Achse 3 verläuft, aber seitlich zu dieser versetzt angeordnet ist. Auf der Revolverscheibe befinden sich - wie in Fig.2 erkennbar - vier Teilerspiegel 8a-8d, die durch Betätigung der Revolverscheibe 7 wahlweise in Wirkstellung, also in den Bereich der optischen Achse, gebracht werden können. Die Revolverscheibe 7 zeigt vier derartige Teilerspiegel, wobei beispielsweise der Teilerspiegel 8a ein Reflexions-/Transmissions-Verhältnis (R/T-Verhältnis) von 20/80, der Teilerspiegel 8b ein R/T-Verhältnis von 35/65, der Teilerspiegel 8c ein R/T-Verhältnis von 43/57 und der Teilerspiegel 8d ein R/T-Verhältnis von 50/50 aufweist. Natürlich ist es auch möglich, noch weitere Teilerspiegel mit speziellen R/T-Charakteristiken auf der Revolverscheibe 7 vorzusehen.

Die Glasplatte 5 und die Revolverscheibe 7 sind zweckmäßigerweise als separate Baueinheit ausgeführt, vgl. in Fig.1 den Ansatz-Modul 12, wobei die Betätigung der Revolverscheibe 7 beispielsweise derart erfolgen kann, daß der Peripher-Bereich der Revolverscheibe aus dem separaten Ansatz-Modul-Gehäuse etwas herausragt, sodaß eine manuelle Drehung durch den Bediener vorgenommen werden kann. Natürlich sind auch motorische Verstellmittel möglich.

Die Funktion der erfindungsgemäßen Vorrichtung ist folgende: Ein Beleuchtungsstrahlenbündel 13 durchdringt nach Verlassen der Frontlinse 2 die Glasplatte 5 und wird an dem Teilerspiegel 8a in zwei Teile aufgespalten. Der eine Teil wird reflektiert und gelangt als Referenzstrahl 10 nach Durchtritt durch die Glasplatte 5 auf den metallisch reflektierenden Referenzspiegel 6 und wird von dort aus in Richtung des Teilerspiegels 8a zurückreflektiert und von dort wiederum in Richtung der Glasplatte 5 umgelenkt. Dieser Referenzstrahlengang ist durch die entsprechenden Pfeile in der Fig.1 gekennzeichnet. Der andere Teil durchdringt den Teilerspiegel 8a und trifft nach Verlassen der aus transparentem Material bestehenden Revolverscheibe 7 auf der Oberfläche des Objekts 4 als Objektstrahl 11 auf. Von dort gelangt er nach Reflexion am Objekt 4 und nach Wiederdurchtritt durch die Revolverscheibe 7 sowie den Teilerspiegel 8a mit dem Referenzstrahl 10 zur Interferenz. Beide Teilstrahlen 10 und 11 gelangen nach Durchtritt durch das Objektiv 1 als Abbildungs- bzw. Meßstrahlenbündel in das eigentliche Mikroskop.
Da es Objekte mit extrem unterschiedlichen Reflexionswerten gibt, müßte die Reflektivität des Referenzspiegels 6 derart variabel gestaltet sein, daß sie an die Gegebenheiten des gerade untersuchten Objektes optimal angepaßt ist, um die ansonsten auftretenden Helligkeitsprobleme zu vermeiden. Das bedeutet, daß in beiden Teilstrahlengängen 10 und 11 möglichst gleiche Helligkeiten vorhanden sein sollten, um einen optimalen Kontrast zu erzielen. Dies geschieht in erfindungsgemäßer Weise nun dadurch, daß die optimale Anpassung an den jeweiligen Reflexionsgrad des mikroskopischen Objektes mittels der Revolverscheibe 7 dadurch erfolgt, daß derjenige Teilerspiegel 8a bzw. 8b bzw. 8c bzw. 8d in Wirkstellung gebracht wird, der die für das auszumessende Objekt 4 optimalste R/T-Charakteristik aufweist. Durch eine derartige Anpassung mittels Betätigung der Revolverscheibe an den Reflexionswert des gerade zu untersuchenden Objektes wird insbesondere bei dunklen Objekten (sehr schwache Reflektivität) eine größere Präparat- und Bildhelligkeit erreicht. So ist es beispielsweise möglich, bei einem Objekt, daß einen Reflexionswert von nur 5% aufweist, eine Helligkeitserhöhung um den Faktor 2 bis 3 zu erreichen.

Es hat sich als vorteilhaft erwiesen, bei Objekten, die einen Reflexionswert im Bereich von 5% aufweisen, beispielsweise einem Kohle-Präparat oder einer Glasplatte, einen Teilerspiegel mit einem R/T-Verhältnis von 20/80 zu wählen. Bei Kristall-Präparaten, die beipielsweise einen Reflexionswert um 25% aufweisen, ist ein Teilerspiegel mit einem R/T-Verhältnis von 35/65 zweckmäßig. Halbleitermaterialien, die einen Reflexionswert um 50% aufweisen, sind zweckmäßigerweise mit einem Teilerspiegel zu untersuchen, der ein R/T-Verhältnis von 43/57 aufweist. Metallische Objekte, beispielsweise Aluminiumspiegel mit einem Reflexionsgrad um 85%, werden vorteilhafterweise mit einem Teilerspiegel mit einem R/T-Verhältnis von 50/50 untersucht. Darüber hinaus ist es natürlich möglich, weitere Teilerspiegel mit speziellen R/T-Charakteristiken vorzusehen.

Nach einer besonders zweckmäßigen Ausführungsform der vorliegenden Erfindung ist der Referenzspiegel 6 auf der Glasplatte 5 mit einer Reflektivität von vorzugweise 85% ausgestattet. Auch hier sind Modifizierungen möglich. Beispielsweise kann die Glasplatte 5 in dem Ansatz-Modul 12 austauschbar gehaltert sein, um sie gegen eine andere Glasplatte auszutauschen, die einen Referenzspiegel mit einer anderen Reflexions-Charakteristik bzw. einer anderen geometrischen Größe aufweist. Auch ist es möglich, daß der Referenzspiegel 6 Scharfstellmarkierungen enthält, die beispielsweise als kleinformatige, linienförmige Fenster innerhalb des metallischen Spiegelbelags ausgebildet sind.

Der erfindungsgemäße Interferenzansatz nach Mirau kann in an sich bekannter Weise am Objektiv eines Mikroskopes mittels eines Schraubengewindes bzw. eines Bajonettverschlusses lösbar adaptiert werden. Mit der erfindunggemäßen Einrichtung ist es möglich, den Einsatzbereich von an sich bekannten Mikroskopen bezüglich spezieller Beobachtungs- bzw. Meßaufgaben zu erweitern. Das erfindungsgemäße Prinzip ist indes auch in einem speziellen Mirau'schen Interferenzmikroskop verwendbar.

## Patentansprüche

1. Variabler Auflicht-Interferenzansatz nach Mirau zum Ansatz an ein Mikroskop zwischen Objekt und Objektiv, enthaltend einen Referenzspiegel auf der Objektiv seite und einen einen Teilerspiegel aufweisenden Träger, welcher zwischen dem Referenzspiegel und dem Objekt angeordnet ist,
**dadurch gekennzeichnet**,
daß der Träger mehrere Teilerspiegel (8a-8c), die sich in ihren jeweiligen Reflexions-/Transmissions-Charakteristiken definiert unterscheiden, und Mittel zur wahlweisen Positionierung eines der Teilerspiegel aufweist in Abhängigkeit von der Reflektivität des zu untersuchenden Objektes (4) in seine Wirkstellung, in welcher er einen Teil des Auflichts zum Referenzspiegel reflektiert.

2. Interferenzansatz nach Anspruch 1,
**dadurch gekennzeichnet,**
daß der Träger als Revolverscheibe (7) ausgebildet ist.

3. Interferenzansatz nach Anspruch 1,
**dadurch gekennzeichnet**,
daß der Träger als linearer Schieber ausgebildet ist.

4. Interferenzansatz nach mindestens einem der vorhergehenden Ansprüche,
**dadurch gekennzeichnet**,
daß auf dem Träger mindestens vier Teilerspiegel (8a-8c) mit folgenden Reflexions-/Transmissions-Charakteristiken vorgesehen sind:
20/80, 35/65, 43/57, 50/50.

5. Interferenzansatz nach mindestens einem der vorhergehenden Ansprüche,
**dadurch gekennzeichnet**,
daß der Referenzspiegel (6) auf der zum Objektiv (1) weisenden Seite einer Glasplatte (5) aufgebracht ist, eine Reflektivität von vorzugsweise 85% aufweist und daß er Scharfstellmarkierungen enthält.

6. Interferenzansatz nach mindestens einem der vorhergehenden
Ansprüche,
**dadurch gekennzeichnet**,
daß die den Referenzspiegel (6) tragende Glasplatte (5) und der die Teilerspiegel (8a-8c), aufnehmende Träger als Ansatz-Modul (12) in einer separaten Baueinheit mit Befestigungsmitteln zusammengefaßt sind, welche so gestaltet sind, daß der Ansatz-gegebenenfalls unter Zwischenschaltung eines weiteren Anflanschteils - am Objektiv (1) lösbar befestigbar ist.

7. Interferenzansatz nach mindestens einem der vorhergehenden Ansprüche,
**dadurch gekennzeichnet**, daß der Ansatz so gestaltet ist,
daß der Referenzspiegel (6) gegen einen solchen mit einer anderen Reflektivität bzw. mit einer anderen geometrischen Größe austauschbar ist.

## Claims

1. Variable incident-light interference attachment according to Mirau, for attachment to a microscope between object and objective, comprising a reference mirror on the objective side and a carrier, which comprises a divider mirror and is arranged between the reference mirror and the object, characterised thereby that the carrier comprises several divider mirrors (8a to 8c), which differ in defined manner in their respective reflection/transmission characteristics, and means for the selectable positioning of one of the divider mirrors in its operative setting, in which it reflects a part of the incident light to the reference mirror, in dependence on the reflectivity of the object (4) to be investigated.

2. Interference attachment according to claim 1, characterised thereby that the carrier is constructed as a revolver disc (7).

3. Interference attachment according to claim 1, characterised thereby that the carrier is constructed as a linear slide.

4. Interference attachment according to at least one of the preceding claims, characterised thereby that at least four divider mirrors (8a to 8c) with the following reflection/transmission characteristics:
20/80, 35/65, 43/57, 50/50
are provided on the carrier.

5. Interference attachment according to at least one of the preceding claims, characterised thereby that the reference mirror (6) is mounted on the side, which faces the objective (1), of a glass plate (5) and has a reflectivity of preferably 85% and that it has focussing markings.

6. Interference attachment according to at least one of the preceding claims, characterised thereby that the glass plate (5) bearing the reference mirror (6) and the carrier receiving the divider mirrors (8a to 8c) are combined as an attachment module (12) into a separate constructional unit with fastening means, which are so designed that the attachment is detachably fastenable - in a given case with interposition of a further flange part - to the objective (1).

7. Interference attachment according to at least one of the preceding claims, characterised thereby that the attachment is so designed that the reference mirror (6) is exchangeable for one with a different reflectivity or another geometric size.

## Revendications

1. Elément variable d'interférence par réflexion d'après Mirau pour une utilisation sur un microscope entre un objet et un objectif, contenant un miroir de référence du côté objectif et un support présentant un miroir répartiteur qui est agencé entre le miroir de référence et l'objet,
caractérisé en ce que
le support présente plusieurs miroirs répartiteurs (8a-8c) qui se différencient par leurs caractéristiques de réflexion/transmission de façon définie et, au moyen d'un positionnement au choix, l'un des miroirs diviseurs peut être mis en action selon la réflectivité de l'objet à examiner 4, position dans laquelle il réfléchit une partie de la lumière d'éclairement vers le miroir de référence.

2. Elément d'interférence selon la revendication 1, caractérisé en ce que le support est configuré en disque révolver (7).

3. Elément d'interférence selon la revendication 1, caractérisé en ce que le support est configuré en tant que curseur linéaire.

4. Elément d'interférence selon au moins l'une des revendications précédentes, caractérisé en ce que sur le support sont prévus au moins quatre miroirs répartiteurs (8a-8c) ayant les caractéristiques suivantes de réflexion/transmission :
20/80, 35/65, 43/57, 50/50.

5. Elément d'interférence selon au moins l'une des revendications précédentes, caractérisé en ce que le miroir de référence (6) est prévu sur une plaque de verre (5) tournée du côté de l'objectif (1), en ce qu'il présente une réflectivité qui est avantageusement de 85% et en ce qu'il contient des marquages en points nets.

6. Elément d'interférence selon au moins l'une des revendications précédentes, caractérisé en ce que la plaque de verre (5) portant le miroir de référence et le support recevant le miroir répartiteur (8a-8c) sont assemblés en tant que modules en éléments (12) dans une unité séparée avec des moyens de fixation, qui sont configurés de manière que l'élément, le cas échéant avec incorporation d'une autre partie d'accrochage, puisse être fixé détachable sur l'objectif (1).

7. Elément d'interférence selon au moins l'une des revendications précédentes, caractérisé en ce que l'élément est configuré de manière que le miroir de référence (6) soit échangeable par un autre ayant une autre réflectivité ou respectivement une autre forme géométrique.
